# EUROPEAN PATENT APPLICATION

(11) **EP 4 510 042 A1**
(43) Date of publication of application: **19.02.2025**
(21) Application number: 24172995.3
(22) Date of filing: 29.04.2024
(51) Int. Cl.: G06N 3/0455, G06N 3/0895, G06N 3/09, G06N 20/00, G06N 3/0499

(54) **IMAGE ENCODING**

(30) Priority: 14.08.2023 IN 202311054604
(71) Applicant: Fujitsu Limited, Kawasaki-shi, Kanagawa 211-8588 (JP)
(72) Inventor: DEVAGUPTAPU, Naga Sri Krishna Chaitanya, 560037 Bangalore (IN); AITHAL, Sumukh K, 560037 Bangalore (IN)
(74) Representative: Haseltine Lake Kempner LLP

(57) **Abstract**

A computer-implemented method comprising performing a training process, the training process comprising: using first and second image encoder networks, generating first and second sets of embeddings based on a pair of first and second input images, respectively; generating first and second nearest neighbor graphs, NNGs, based on the first and second sets of embeddings, respectively; using at least one graph neural network, GNN, extracting first and second representations from the first and second NNGs, respectively; and adjusting at least one network weight of the first image encoder network based on a difference between the first and second representations.

## Description

The present invention relates to training and using an image encoder network, and in particular to a computer-implemented method, a computer program, and an information programming apparatus.

Unlabeled data (e.g. images) is relatively easy to obtain from the internet and other sources. But obtaining annotated data or annotating the unlabeled data is time-consuming and expensive. Learning representations from unlabeled data (images) helps reduce annotation cost (in time and money). Neural networks may be used to learn such representations from images using self-supervised learning techniques. The quality/accuracy of the representations will impact the usefulness and accuracy of any ML model employing the neural network learning the representations or employing the learned representations.

It is desirable to be able to extract more useful representations from images.

According to an embodiment of a first aspect there is disclosed herein a computer-implemented method comprising performing a training process, the training process comprising: using first and second (or student and teacher) image encoder networks, generating first and second sets of embeddings based on (a pair of) first and second input images, respectively; generating first and second nearest neighbor graphs, NNGs, based on the first and second sets of embeddings, respectively; using at least one graph neural network, GNN, extracting first and second representations from the first and second NNGs, respectively; and adjusting at least one network weight of the first image encoder network based on a difference between the first and second representations, (wherein the first and second input images comprise first and second augmentations of a reference image or the reference image and an augmentation thereof).

The first and second input images may comprise first and second augmentations of a reference image or the reference image and an augmentation thereof.

A said augmentation (the first and/or second augmentation, or the augmentation) may comprise any of: a recoloring of the reference image; a brightness adjustment of the reference image; cropping the reference image; blurring the reference image; flipping the reference image; and a rotation of the reference image.

The pair of input images may not comprise labels.

Generating the first set of embeddings may comprise dividing the first input image into a plurality of first patch tokens/patches and, using the first image encoder network, updating/adjusting the first patch tokens/patches to generate a first set of embeddings comprising first updated patch tokens/patches.

Generating the second set of embeddings may comprise dividing the second input image into a plurality of second patch tokens/patches and, using the second image encoder network, updating/adjusting the second patch tokens/patches to generate the second set of embeddings comprising second updated patch tokens/patches.

Dividing a said input image into a plurality of said patch tokens/patches may comprise dividing the said input image into a grid of non-overlapping contiguous patch tokens/patches.

Updating said patch tokens may comprise updating each patch token based on its correlation with (each of the) other patch tokens.

Updating the first patch tokens may comprise updating each first patch token based on its correlation with (each of the) other first patch tokens.

Updating the second patch tokens may comprise updating each second patch token based on its correlation with (each of the) other second patch tokens.

The first and second image encoder networks each may comprise a transformer-based architecture.

The first and second image encoder networks each may comprise a self-attention or attention network/mechanism.

The first and second image encoder networks each may comprise a transformer network comprising a sequence of self-attention and feed-forward layers (paralleled with skip connections).

Updating the first patch tokens may comprise updating each first patch token by looking at the other first patch tokens with an attention mechanism.

Updating the second patch tokens may comprise updating each second patch token by looking at the other second patch tokens with an attention mechanism.

Generating the first set of embeddings may comprise dividing the first input image into a plurality of first patch tokens/patches and, using the first image encoder network, updating/adjusting the first patch tokens/patches by analyzing/considering the other first patch tokens with an attention mechanism, to generate a first set of embeddings comprising first updated patch tokens/patches; and generating the second set of embeddings may comprise dividing the second input image into a plurality of second patch tokens/patches and, using the second image encoder network, updating/adjusting the second patch tokens/patches by analyzing/considering the other first patch tokens with an attention mechanism, to generate the second set of embeddings comprising second updated patch tokens/patches.

The first and second image encoder networks may comprise first and second vision transformers, respectively.

Generating the first set of embeddings may comprise dividing the first input image into the plurality of first patch tokens/patches and generating a first class token which includes information regarding the other first patch tokens, and updating/adjusting the first patch tokens/patches by analyzing/considering the other first patch tokens with an attention mechanism may comprise analyzing/considering the first class token with an attention mechanism to update the first class tokens.

Generating the second set of embeddings may comprise dividing the second input image into the plurality of second patch tokens/patches and generating a second class token which includes information regarding the other second patch tokens, and updating/adjusting the second patch tokens/patches by analyzing/considering the other second patch tokens with an attention mechanism may comprise analyzing/considering the second class token with an attention mechanism to update the second class tokens.

The first image encoder network may be a student image encoder network and the second image encoder network may be a teacher image encoder network.

Generating each of the first and second NNGs may comprise generating a k-NNG, wherein k is a positive integer.

k may be any of 1-30 or 15-25 or 20.

Generating each of the first and second NNGs may comprise selecting k nearest neighbors for each said updated patch token and including nodes in the NNG corresponding to the said updated patch tokens, each connected to the nodes corresponding to its k nearest neighbors, wherein k is a positive integer.

The first and second NNGs may not comprise any node corresponding directly to the first or second class token.

Generating the first NNG may comprise selecting k nearest neighbors for each first updated patch token and including nodes in the NNG corresponding to the first updated patch tokens, each connected to the nodes corresponding to its k nearest neighbors, wherein k is a positive integer.

Generating the second NNG may comprise selecting k nearest neighbors for each second updated patch token and including nodes in the NNG corresponding to the second updated patch tokens, each connected to the nodes corresponding to its k nearest neighbors, wherein k is a positive integer.

Selecting the k nearest neighbors of a given patch token may comprise selecting k patch tokens among the patch tokens concerned having the smallest (Euclidean) distance to the given patch token.

Extracting the first and second representations may comprise generating first and second graph embeddings of the of first and second NNGs, respectively.

Extracting each of the first and second representations may comprise extracting a node representation/embedding of each node in the NNG concerned and combining the node representations/embeddings to generate the representation concerned.

Each node representation/embedding may comprise information about at least one or each other node in the NNG concerned and connections thereto (and therebetween).

The at least one GNN may comprise a plurality of message passing layers.

The training process may comprise computing the difference between the first and second representations.

Computing the difference between the first and second representations may comprise: performing a pooling operation (including any of max pooling and mean pooling) on the first representation to generate first pooled features and performing a pooling operation on the second representation to generate second pooled features; and computing a difference between the first and second pooled features.

The first and second pooled features may comprise first and second feature vectors, respectively.

Computing the difference between the first and second pooled features may comprise computing a cosine difference or a Euclidean difference between the first and second pooled features/feature vectors.

The training process may comprise computing an embedding difference between the first and second sets of embeddings, and wherein the adjustment of the at least one network weight of the first image encoder network is based on the embedding difference.

The embedding difference may comprise/be a (cosine/Euclidean) difference between the first and second class tokens.

Adjusting the at least one network weight of the first image encoder network may comprise adjusting the at least one weight based on a loss comprising the difference between the first and second representations and the embedding difference.

Adjusting the at least one network weight of the first image encoder network may comprise adjusting the at least one weight to reduce or bring to or towards zero the loss.

Adjusting the at least one network weight of the first image encoder network may comprise adjusting the at least one network weight of the first image encoder network to reduce or bring to or towards zero the difference between the first and second representations.

The first and second input images may comprise first and second augmentations of a reference image or the reference image and an augmentation thereof, and adjusting the at least one network weight of the first image encoder network may comprise adjusting the at least one network weight of the first image encoder network to reduce or bring to or towards zero the difference between the first and second representations.

Adjusting the at least one network weight of the first image encoder network may comprise adjusting the at least one network weight of the first image encoder network based on a contrastive loss.

The first and second input images may be a first pair and may comprise first and second augmentations of a reference image or the reference image and an augmentation thereof; the computer-implemented method may comprise performing the training process again using a second pair of input images comprising input images which are not augmentations of a reference image or augmentations of each other; and adjusting the at least one network weight of the first image encoder network (in both training processes) may comprise adjusting the at least one network weight of the first image encoder network based on a contrastive loss.

The first and second input images may be a first pair and may comprise first and second augmentations of a reference image or the reference image and an augmentation thereof, and the difference between the first and second representations may be a first difference; and the computer-implemented method may comprise performing the training process again using a second pair of input images comprising input images which are not augmentations of a reference image or augmentations of each other, and the difference between the first and second representations corresponding to the second pair of input images may be a second difference, and: adjusting the at least one network weight of the first image encoder network (in both training processes) may comprise adjusting the at least one network weight of the first image encoder network based on/to reduce a contrastive loss which is lower the shorter/smaller the first difference and the longer/larger second difference; or adjusting the at least one network weight of the first image encoder network (in both training processes) may comprise adjusting the at least one network weight of the first image encoder network based on/to reduce a contrastive loss which decrease with decreasing first difference and increasing second difference.

Adjusting the at least one network weight of the first image encoder network may comprise adjusting each network weight of the first image encoder network.

The computer-implemented method may comprise performing/iterating the training process for a plurality of iterations with different pairs of input images for each iteration.

The computer-implemented method may comprise performing/iterating the training process until (an iteration in which) the difference between the said first and second representations or the embedding difference or the loss converges or is below an error threshold.

The computer-implemented method may comprise performing/iterating the training process until (a predefined number of successive iterations in which) the difference between the said first and second representations or the embedding difference or the loss is below an error threshold.

The computer-implemented method may comprise performing/iterating the training process a predefined number of iterations.

The computer-implemented method may comprise updating at least one network weight of the second (or teacher) image encoder network less frequently than the first (or student) image encoder network.

The computer-implemented method may comprise distilling the updates to the first (or student) image encoder network after a number of iterations of the training process to the second (or teacher) image encoder network using a momentum encoder or using an exponential moving average-based update process.

The computer-implemented method may comprise performing a task-specific training process after performing/iterating the training process.

The task-specific training process may comprise training the first image encoder network for use in a task.

The task-specific training process may comprise using the first image encoder network to generate a set of training embeddings based on at least one task-training image and adjusting at least one network weight of the first image encoder network based on a difference between the training embeddings and a set of target embeddings which is based on the at least one task-training image or based on a difference between the training embeddings and at least one label of the task-training image.

The task may comprise an image processing task.

The computer-implemented method may comprise using the first image encoder network in an image processing task after performing/iterating the training process (and the task-specific training process).

The image processing task may comprise at least one of: visual question answering, VQA; object detection; image classification; image segmentation; and image retrieval.

The image processing task may comprise using the first image encoder network (after training) to generate a set of (task-specific) embeddings based on at least one task-specific image and outputting a result comprising: a class and/or location of at least one object detected in the at least one task-specific image; or a class of the at least one task-specific image.

According to an embodiment of a second aspect there is disclosed herein a computer program which, when run on a computer, causes the computer to carry out a method comprising performing a training process, the training process comprising: using first and second (or student and teacher) image encoder networks, generating first and second sets of embeddings based on (a pair of) first and second input images, respectively; generating first and second nearest neighbor graphs, NNGs, based on the first and second sets of embeddings, respectively; using at least one graph neural network, GNN, extracting first and second representations from the first and second NNGs, respectively; and adjusting at least one network weight of the first image encoder network based on a difference between the first and second representations, (wherein the first and second input images comprise first and second augmentations of a reference image or the reference image and an augmentation thereof).

According to an embodiment of a third aspect there is disclosed herein an information processing apparatus comprising a memory and a processor connected to the memory, wherein the processor is configured to perform a training process, the training process comprising: using first and second (or student and teacher) image encoder networks, generating first and second sets of embeddings based on (a pair of) first and second input images, respectively; generating first and second nearest neighbor graphs, NNGs, based on the first and second sets of embeddings, respectively; using at least one graph neural network, GNN, extracting first and second representations from the first and second NNGs, respectively; and adjusting at least one network weight of the first image encoder network based on a difference between the first and second representations, (wherein the first and second input images comprise first and second augmentations of a reference image or the reference image and an augmentation thereof).

Features relating to any aspect/embodiment may be applied to any other aspect/embodiment.

Reference will now be made, by way of example, to the accompanying drawings, in which:
Figure 1 is a diagram illustrating a comparative method;
Figure 2 is a diagram illustrating a comparative method;
Figure 3 is a diagram illustrating a training process;
Figure 4 is a diagram illustrating a method;
Figure 5 is a diagram illustrating a training process;
Figure 6 is a diagram illustrating a training process;
Figure 7 is a diagram illustrating a training process;
Figure 8 is a diagram illustrating methods;
Figure 9 is a diagram useful for understanding embodiments;
Figure 10 is a table of results; and
Figure 11 is a diagram illustrating an apparatus.

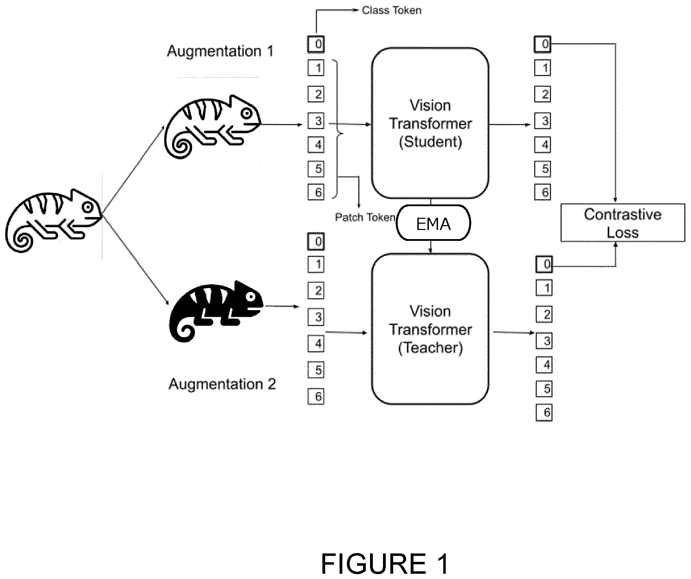

Figure 1 is a diagram illustrating a first comparative method (comparative method 1). Comparative method 1 is a method for training a self-supervised vision transformer which is a specific type of image encoder network. An input image is augmented to generate two augmented images. The augmented images are divided into patches and fed into student and teacher vision transformers, respectively. The vision transformers each generate an embedding of the image concerned. Loss is computed between the embeddings and the student vision transformer is updated based on the loss. In particular, a contrastive loss is employed, which will be described later. A momentum encoder (EMA) is used between the student and teacher backbone to update the teacher. A problem with comparative method 1 is that it does not train the vision transformer to explicitly capture the structure of the image and the relationship between the patches of the image. The first comparative method may be referred to as DING (Caron et al. 2021, "Emerging Properties in Self-Supervised Vision Transformers").

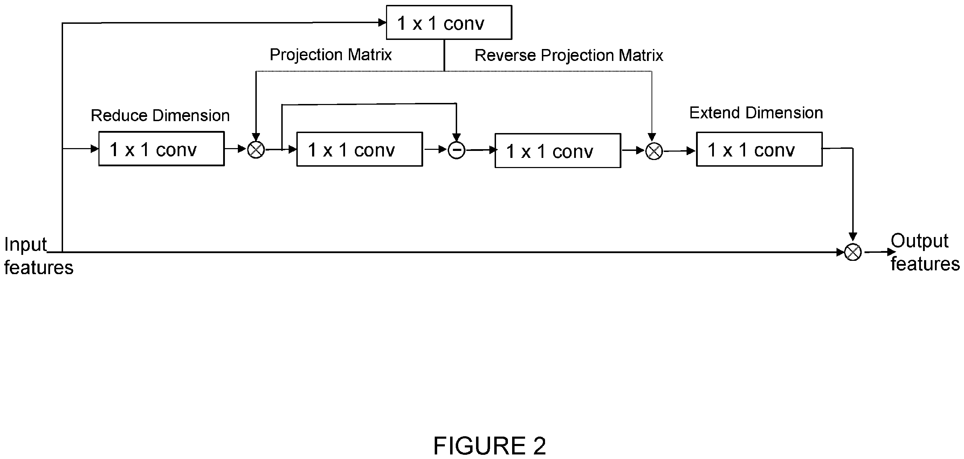

Figure 2 illustrates a second comparative method (comparative method 2). A graph is built in the interaction space and relationship reasoning is learnt over the graph. After the reasoning is completed, the updated information is projected back to the original co-ordinate space. This enables relation reasoning in the early stages of a convolutional neural network (CNN). An aim of comparative method 2 is to perform global relation reasoning by projecting features from regions of interest to a latent interaction space. A problem with comparative method 2 is that is primarily focuses on Convolutional Neural Networks and does not work with recent Transformer architectures. Furthermore, it requires labelled data to train the global relation reasoning module.

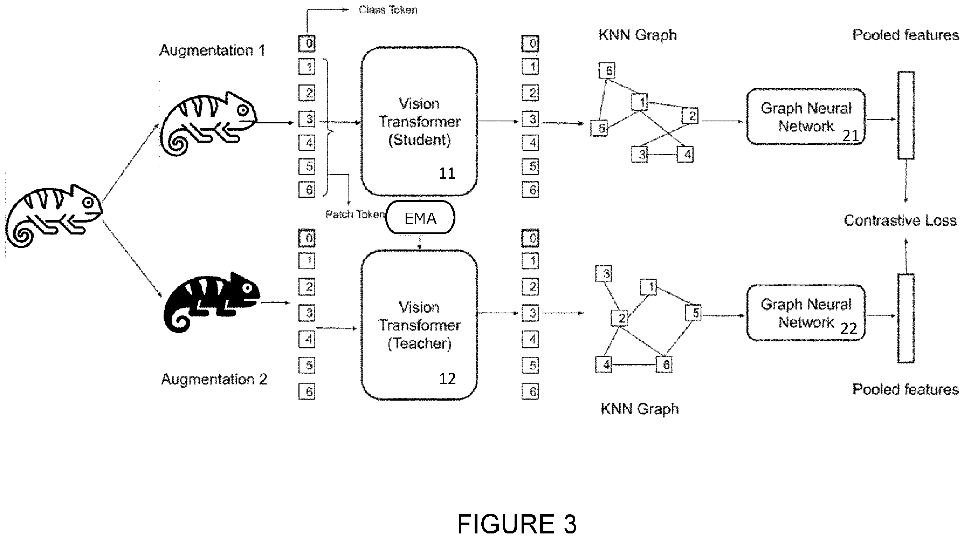

Figure 3 is a diagram illustrating a training process according to an implementation. An image is augmented in two different ways to generate first and second input images which are augmentations of the original image. The augmentations may comprise any of a recoloring of the image, a brightness adjustment of the image, cropping the image, blurring the image, flipping the image, and rotation of the image.

The pair of input images do not comprise labels. The first and second input images are divided into patch tokens (may be referred to as patches) to generate a plurality of first patch tokens and a plurality of second patch tokens, respectively. In other words, the training process comprises dividing the said input image into a grid of non-overlapping contiguous patch tokens. First and second class tokens are also generated. The first class token includes information regarding the other first patch tokens. The role of this token is to aggregate information from the entire sequence at various granularities and a projection head may be attached at its output. Corresponding considerations apply to the second class token.

A student vision transformer 11 generates a first set of embeddings based on the plurality of first patch tokens. The embeddings may be considered to be or comprise updated patch tokens. The student vision transformer 11 in this implementation is a transformer network with a "pre-norm" layer normalization and a sequence of self-attention and feed-forward layers, paralleled with skip connections. The self-attention layers update the token representations by looking at the other token representations with an attention mechanism. The updated patch tokens may be considered generated by updating each patch token based on its correlation with other patch tokens (among the first plurality of patch tokens in the case of the student vision transformer). The first class token is also used along with the patch tokens to generate the embeddings.

A teacher vision transformer 12 generates a second set of embeddings based on the plurality of second patch tokens (and the second class token). The architecture and operation of the teacher 12 is the same as that of the student 11 and duplicate description is omitted.

A pair of nearest neighbor graphs (NNGs) are generated based on the first and second sets of embeddings, respectively. Specifically, a pair of k-NNGs are generated, where k is a positive integer. k is any of 10-30 or 15-25 or 20, among other numbers, for example. Generating each of the first and second NNGs comprises selecting k nearest neighbors for each said updated patch token (among the set of embeddings concerned) and including nodes in the NNG corresponding to the said updated patch tokens, each connected to the nodes corresponding to its k nearest neighbors, wherein k is a positive integer. The nearest neighbors are determined by computing a distance measure between the updated patch tokens such as Euclidean or cosine or L1 or L2, among others. The embeddings of the class tokens are not used in the NNG. It may be considered that generating the sets of embeddings includes updating the patch tokens based on the class tokens but not updating the class tokens to give rise to embeddings.

The training process comprises using a pair of graph neural networks (GNNs) 21, 22 to extract a pair of representations from the pair of NNGs, respectively. The pair of GNNs 21, 22 may have shared parameters and may be considered the same GNN. A single GNN may be used instead of the pair.

A difference between the representations of the pair of representations is computed in the form of a difference between the pooled features of one representation and the pooled features of the other representation. For example, max pooling or mean pooling may be used. The first and second pooled features may comprise first and second feature vectors, respectively. To compute the difference, cosine difference or Euclidean distance may be used, among other distance measures.

Although not illustrated, a weight adjustment is carried out by adjusting at least one weight (or every weight) of the student vision transformer 11 based on the computed difference, for example to reduce or bring towards zero the computed difference.

The process described above is iterated/performed for a number of iterations using a different image or different augmented images. The teacher vision transformer 12 is updated less frequently than the student vision transformer 11. A momentum encoder is used to update the teacher student vision transformer 12 based on a number of updates to the student vision transformer 11. The momentum encoder uses the exponential moving average (EMA). That is, after a certain number of updates to the student vision transformer 11 the updates are automatically distilled to the teacher vision transformer 12 using an EMA block, as illustrated.

In Figure 3 a contrastive loss is indicated. In a specific implementation a contrastive loss is used to compare the representations extracted by the GNNs 21, 22 and update the student vision transformer 11. To use a contrastive loss, the training process is carried out with a different pair of input images in which the images are not augmentations of a reference image or augmentations of each other. That is, the input images of the second pair are two different images (i.e. two reference images). The first pair may be referred to as a matching or positive pair and the second pair may be referred to as a non-matching or negative pair.

The difference computed between representations extracted by the GNNs 21, 22 based on the first pair of input images is referred to as a first difference. The difference is computed between representations extracted by the GNNs 21, 22 based on the second pair of input images, as a second difference.

A contrastive loss-based approach can then be used in the weight adjustment step of adjusting at least one weight (or every weight) of the student vision transformer 11. That is, a contrastive loss function is used so that the loss is low when the first difference (corresponding to the positive pair) is shorter and the second difference (corresponding to the negative pair) is longer. The weight adjustment step is to reduce the loss. It will be appreciated that a similar loss like triplet loss may be used.

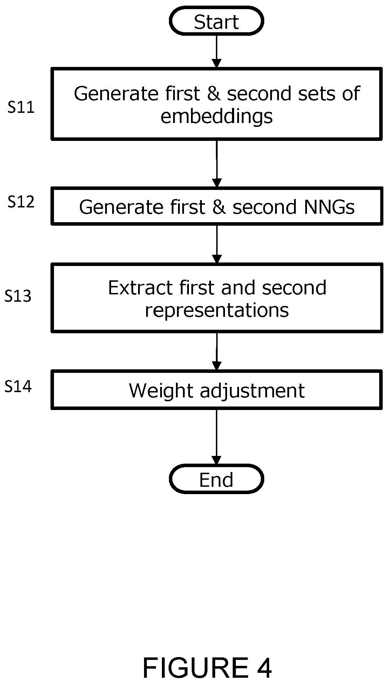

Figure 4 is a diagram illustrating a training process according to an implementation.

Step S11 comprises, using first and second image encoder networks, generating first and second sets of embeddings based on a pair of first and second input images, respectively. The first and second image encoder networks may be referred to as student and teacher image encoder networks. The first and second input images may comprise first and second augmentations of a reference image or the reference image and an augmentation thereof, or two different (reference) images.

Step S12 comprises generating first and second nearest neighbor graphs, NNGs, based on the first and second sets of embeddings, respectively.

Step S13 comprises, using at least one graph neural network, GNN, extracting first and second representations from the first and second NNGs, respectively. Step S14 comprises adjusting at least one (or every) network weight of the first image encoder network based on a difference between the first and second representations.

Any of the steps may comprise processing described with reference to Figure 3. For example, the student and teacher image encoder networks may carry out any of the processing described above with reference to the student and teacher vision transformers 11, 12, and/or may be or comprise the student and teacher vision transformers 11, 12.

The training process may be iterated. The teacher image encoder network may be updated using a momentum encoder as the teacher vision transformer 12 is updated as described with reference to Figure 3.

A contrastive loss-based approach (or triplet loss-based approach) may be employed as described above with reference to Figure 3.

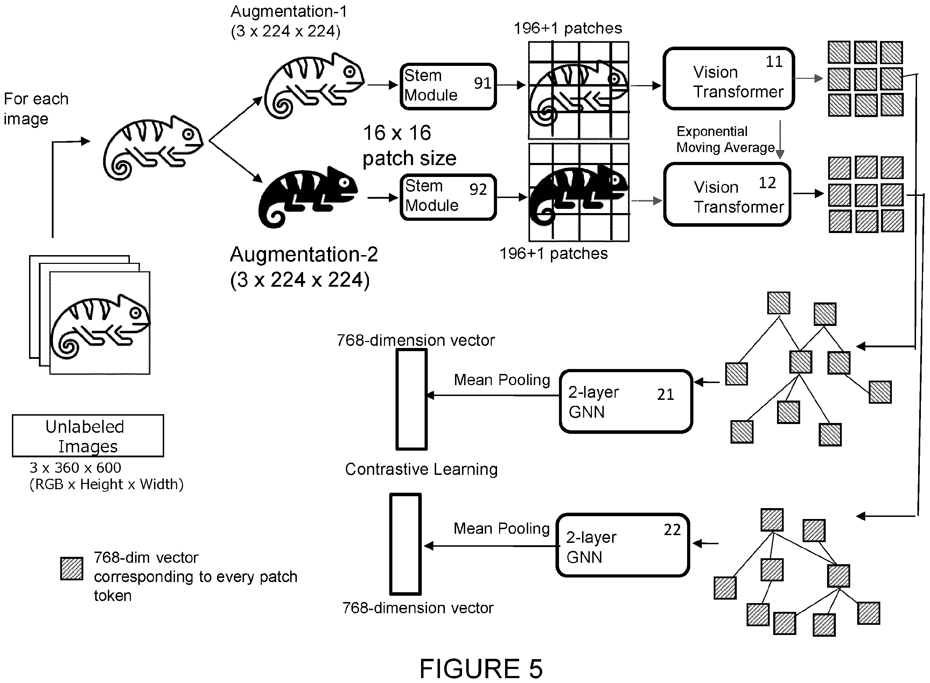

Figure 5 is a diagram illustrating a training process according to an implementation which may be considered a more specific implementation of the Figure 3 training process. Here, specific details such as vector dimensions are illustrated. Such details are illustrated and described below as an example only.

A plurality of images are loaded (corresponding to different iterations of the training process), each of size 3x360x600 (RGB x Height x Width). After augmentation first and second input images are generated for an iteration, each of size 3x224x224. This size is commonly used among some known image processing methods.

The first and second input images are divided into patches by first and second stem modules 91, 92 (or may be a single stem module to process both input images) using a 16 x 16 patch size. For each input image, 196+1 patches are generated (the +1 is for the class token). That is, 224/16 = 14, and 14 x 14 = 196.

Student and teacher vision transformers 11, 12 update the patches to generate updated patches. As illustrated in the bottom left-hand-side of Figure 5, each updated patch or embedding is/comprises a 768-dimension vector corresponding to the patch token concerned. NNGs are generated based on the updated patches. First and second GNNs 21, 22 are used to extract first and second representations of the first and second NNGs (here, 2-layer GNNs are used).

As illustrated, mean pooling is used to pool the features of the first and second representations to generate first and second 768-dimension vectors corresponding to the first and second representations (and to the first and second input images). The difference is computed between these and a weight adjustment of the student vision transformer 11 is carried out based thereon. As illustrated, a contrastive loss-based approach may be used (indicated here as contrastive learning - this term may also be used herein to described a contrastive loss-based approach).

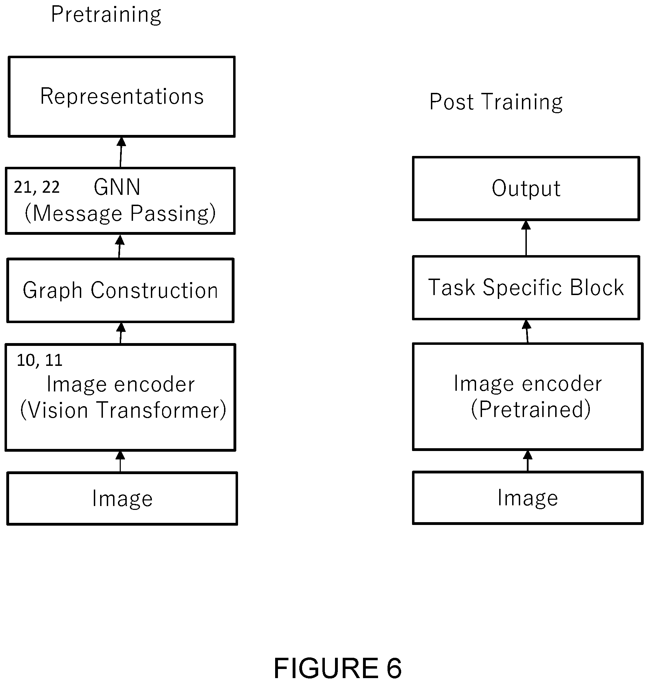

Figure 6 is a diagram illustrating a training process referred to as "pretraining" and a task-specific training process referred to as "post training", according to an implementation.

As illustrated on the left-hand-side, the training process (pretraining) comprises inputting an image to an image encoder (e.g. vision transformer), constructing a graph (NNG) based on the output of the image encoder, and using a GNN (with message passing layers) to extract a representation of the constructed graph. This process may be considered a thread of other training process described herein, the thread related to one input image of a pair of input images, i.e. so that a training process may comprise the training process illustrated on the left-hand-side of Figure 6 for each of a plurality of input images, followed by a weight adjustment step of one of the image encoders based on the difference between the representations.

As illustrated on the right-hand-side, the task-specific training process comprises using a pretrained image encoder network (trained using any of the training process described herein) to encode an image (i.e. to generate a set of embeddings) and using a task-specific block to generate an output based on the image. The task-specific block depends on the task for which the image encoder network is being used and is a module for the particular computer vision task. For example, a linear layer can be used for image classification and a bounding box output can be used for Object detection. Example tasks will be described below.

Methods disclosed herein may comprise performing any training process described herein followed by a task-specific training process using the (pretrained) student image encoder network.

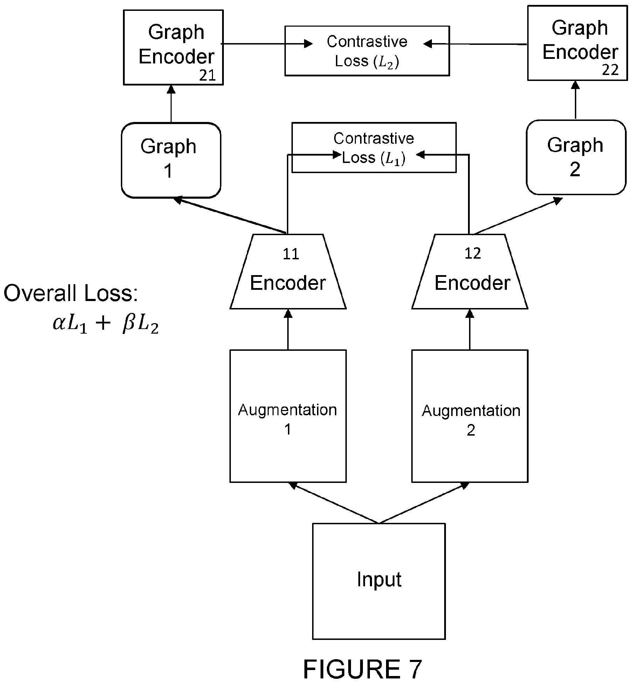

Figure 7 is a diagram illustrating a training process according to an implementation. The training process comprises obtaining two augmentations, augmentations 1 and 2 (first and second input images) based on an input (reference image). The augmentations are input to first and second (student and teacher) image encoders 11, 12 which generate first and second sets of embeddings based on the first and second input images. First and second NNGs (graph 1 and graph 2) are generated based on the first and second sets of embeddings, respectively. A pair of graph encoders 21, 22 encode the first and second NNGs, respectively, to generate first and second representations. A primary difference (L2) is computed between the first and second representations and a secondary difference (L1) is computed between output of the student and teacher image encoders 11, 12. Specifically, the secondary difference is between the class tokens. The secondary difference may be computed using e.g. cosine distance or Euclidean distance or any other distance. The primary difference may be computed as already described herein.

In this training process implementation a total loss/error is based on the primary difference and the secondary difference. As indicated in Figure 7, a contrastive loss-based approach may be used employing the total loss based on the primary difference and the secondary difference.

The other training processes described herein employ the primary difference, but those training process may also employ the secondary difference, similarly to the training process illustrated in Figure 7. That is, any training process described herein may employ a total loss based on the primary difference and the secondary difference. The secondary difference may be referred to as an embedding difference.

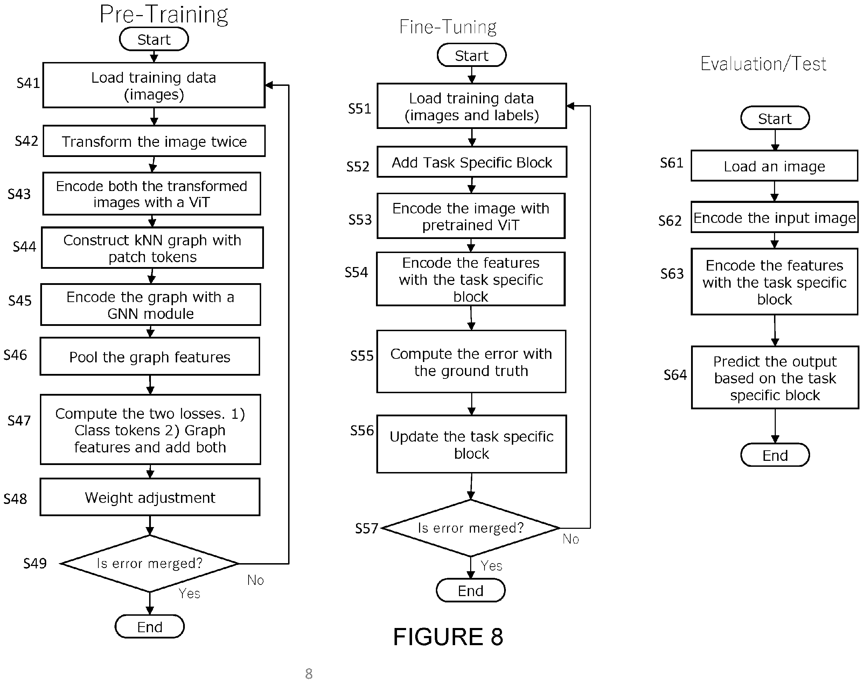

Figure 8 is a diagram illustrating a training process referred to as "pre-training" according to an implementation, a task-specific training process referred to as "fine-tuning" according to an implementation, and a test process referred to as "evaluation/test" according to an implementation.

The pretraining process comprises steps S41-S49. S41 comprises loading training data, for example at least one (reference) image.

Step S42 comprises transforming/augmenting the image twice to generate first and second input images. Step S42 may comprise augmenting the image once and using the original image and its augmentation as the first and second input images.

Step S43 comprises encoding the first and second input images using student and teacher image encoder networks, respectively, to generate first and second sets of updated patch tokens. For example, vision transformers (ViTs) may be used.

Step S44 comprises constructing a kNN graph for each set of patch tokes, to generate first and second kNNs.

Step S45 comprises encoding each kNN graph with a GNN module, to extract first and second representations corresponding to the first and second kNN graphs.

Step S46 comprises pooling the graph features, e.g. using mean pooling or max pooling. First and second features vectors may be generated corresponding to the first and second representations, respectively.

Step S47 comprises computing the primary and secondary differences described above with reference to Figure 7, and adding them together to compute a total loss. Here, a contrastive loss-based approach may be employed as described above (i.e. by using a second pair of input images wherein one pair is a positive/matching pair and the other pair is a non-matching/negative pair).

Step S48 comprises a weight adjustment. That is, at least one (or every) weight of the student ViT is adjusted based on the difference between the first and second pooled features. For example, the weight adjustment is to reduce or bring to or towards zero the loss.

Step S49 comprises determining if the error is merged/converged. Step S49 may comprise determining if the difference between the said first and second representations or the embedding difference or the loss is below an error threshold. Step S49 may comprise determining if the difference between the said first and second representations or the embedding difference or the loss has been below an error threshold for a certain (predetermined, predefined) number of iterations. If yes, then the pretraining process ends. Otherwise (if no) a new at least one training image is loaded. Instead, the process may return to step S42 and for example all the required training images may be loaded in a first step before the pretraining process actually begins.

The determination in step S49 may comprise a determination as to whether a set number of iterations has been carried out, instead of or in addition to the above example determinations. For example, the training process may end based on whichever occurs first - an error convergence or a maximum number of iterations.

The loading of images and the augmentation steps may be performed in a step before the pre-training process and therefore not be a part of the process/method.

The fine-tuning process comprises steps S51-S57. Step S51 comprises loading training data, for example at least one (reference) image. Step S52 comprises adding a task-specific block, for example a projection head on the (pretrained) student image encoder network. Step S53 comprises encoding the training image with the pretrained student image encoder network. Step S54 comprises encoding the extracted features/embeddings with the task-specific block. Steps S53 and S54 may be considered a single step of using the student image encoder network with the task-specific block.

Step S55 comprises computing a difference (error) between the output of the task-specific block and ground truth data (e.g. label(s)) corresponding to the training image. Step S56 comprises a weight adjustment of the student image encoder and/or the task-specific block, for example to reduce or bring to or towards zero the computed difference.

Step S57 comprises a determination as to whether the error has merged/converged and ending the process if yes, or performing another iteration with a different training image if no. Considerations described above with respect to step S49 apply to step S57.

The test process comprises steps S61-S64. Step S61 comprises loading an image (a test image). Step S62 comprises encoding the test image using the (pretrained and fine-tuned) student image encoder network. Step S63 comprises encoding the extracted features/embeddings using the (finetuned) task-specific block. Steps S62 and S63 may be considered a single step of using the student image encoder and the task-specific block to process the test image. Step S64 comprises predicting an output/a result based on the output of the task-specific block.

Methods disclosed herein may comprise any training process described herein followed by the finetuning process (which may be referred to as a task-specific training process) and/or a process of using the trained image encoder network in a task.

Steps of the pretraining process may comprise features of corresponding steps in any of the other training processes described herein, for example described with reference to Figures 3, 4, 5, 6 (left-hand-side) and 7.

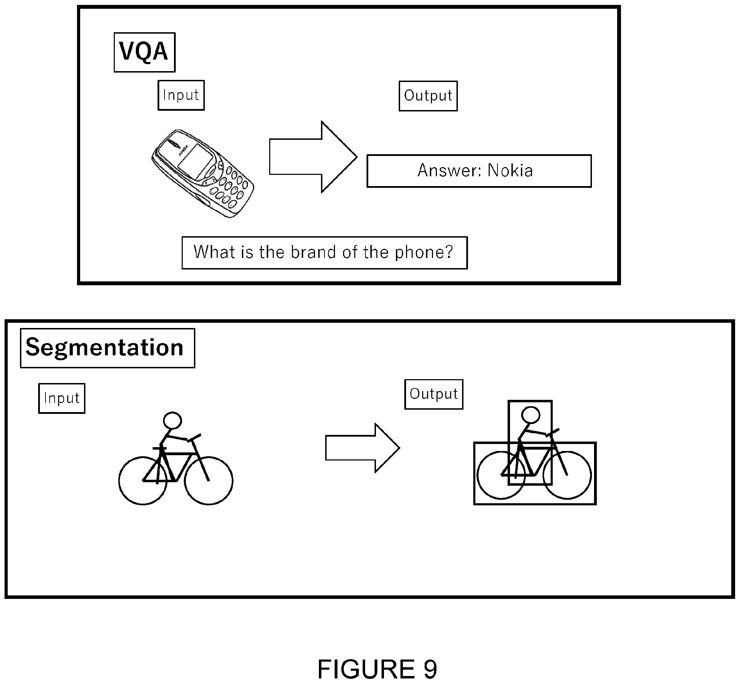

Figure 9 is a diagram illustrating a representation of two example tasks. The first task is visual question answering (VQA). Here, an image is input along with a question. In this example, the image is of a phone and the question is "What is the brand of the phone?". The image is processed and an answer is output (in this example, "Nokia"). An image encoder (vision transformer) trained using any of the training processes described herein may be used to encode the image as part of the VQA task. It will be appreciated that the improved learning from the image (for example, in terms of learning the structure of the image) may lead to more accurate VQA performance.

The second task is segmentation. Here, an image is input and processed, and the output is a segmented image, i.e. an image which is partitioned into multiple parts or regions based on the characteristics of the pixels in the image. An image encoder (vision transformer) trained using any of the training processes described herein may be used to encode the image as part of the segmentation task. It will be appreciated that the improved learning from the image (for example, in terms of learning the structure of the image) may lead to more accurate segmentation performance.

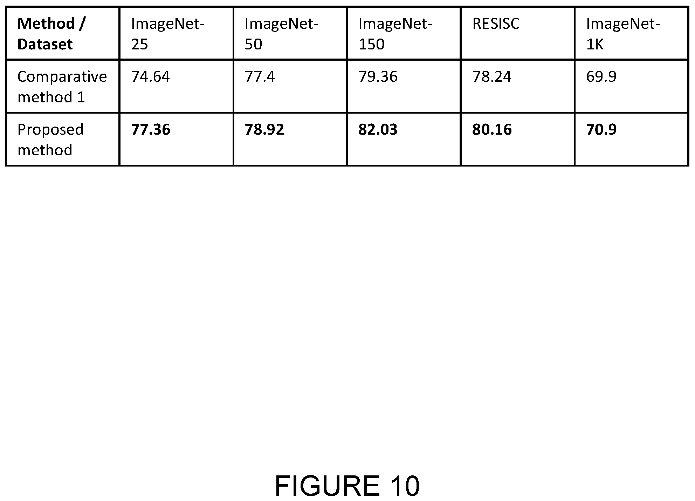

Figure 10 illustrates a table of results of applying models trained by comparative method 1 and a training process described herein to a task on the datasets ImageNet-25, ImageNet-50, ImageNet-150, RESISC, and ImageNet-1K (ImageNet: https://www.image-net.org/, Deng, J., Dong, W., Socher, R., Li, L. J., Li, K., & Fei-Fei, L. (2009). Imagenet: A large-scale hierarchical image database, In 2009 IEEE conference on computer vision and pattern recognition (pp. 248-255); RESISC: G. Cheng, J. Han and X. Lu, "Remote Sensing Image Scene Classification: Benchmark and State of the Art," in Proceedings of the IEEE, vol. 105, no. 10, pp. 1865-1883, Oct. 2017, doi: 10.1109/JPROC.2017.2675998). The results are in the form of class-level accuracy, i.e. (Total Number of correct predicted samples) / Total number of samples.

Any training process described herein may comprises a number of iterations. The number of iterations may depend on a determination after every (or some) iterations whether the difference between the said first and second representations or the embedding difference or the loss is below an error threshold, or a determination whether the difference between the said first and second representations or the embedding difference or the loss has been below an error threshold for a certain (predetermined, predefined) number of iterations. The determination may comprise a determination as to whether a set number of iterations has been carried out, instead of or in addition to the above example determinations. For example, a training process may end based on whichever occurs first - an error convergence or a maximum number of iterations. In other words, the considerations described with respect to step S49 may apply to any training process.

Extracting a representation of a graph may be referred to as embedding the graph or generating graph embeddings (or node embeddings). Extracting a representation of a graph may be referred to as representation learning. Extracting a representation of a graph may be considered to comprise extracting a representation of each node in the graph, and may be considered comprise combining these node representations (or node-level representations) to obtain a representation of the graph. The node embeddings or node representations may comprise information, for the node, about some or all of the other nodes in the graph and connections thereto (and therebetween).

A GNN comprises layers which may be referred to as message passing layers, responsible for combining node and edge information into node embeddings. This process may be referred to as graph convolution. For example, a node embedding may comprise information about the node and other nodes (and edges) in its neighborhood. It will be appreciated that there are a number of specific ways in which a representation may be extracted from a graph and the specific method used is not important in the methods disclosed herein.

There may be considered disclosed herein a self-supervision module that ensures that relationships between the patches of an image are consistent across two different views of the image. A contrastive loss-based approach may be employed to train an image encoder network (based on the consistency (or similarity) between the constructed graph of the two views). Training processes disclosed herein adopt message passing with GNN layers and enforce consistency between the features learned from the graphs generated using two different image views.

So that the image encoder network may extract information relating to the structure of the input image, kNN graphs are generated based on embeddings a graph based neural network (GNN) is used to extract representations therefrom.

Example tasks may comprise computer vision tasks like visual question answering (VQA), image classification, object detection/segmentation, etc.

There is disclosed herein a method for understanding the content in an image (via representations) by explicitly modelling the relationships between the objects and structure in the image. Such methods may be considered to employ semantic graph consistency as an auxiliary task for learning representations (to understand the content) from unlabeled images to understand the content in the image.

Image representations (embeddings) may be used for various downstream tasks like object detection (detecting objects in an image), semantic segmentation (classifying every pixel in the image), image retrieval, visual-question answering etc. which benefit greatly from modelling the structure.

Aspects disclosed herein may achieve better performance in various downstream tasks (object detection, segmentation, visual-question answering, etc.), a high robustness to Out-of-distribution (real-world) images that are not seen while training, and others as described above. Aspects disclosed herein may be considered to induce structure in pretraining which may be helpful in computer vision tasks.

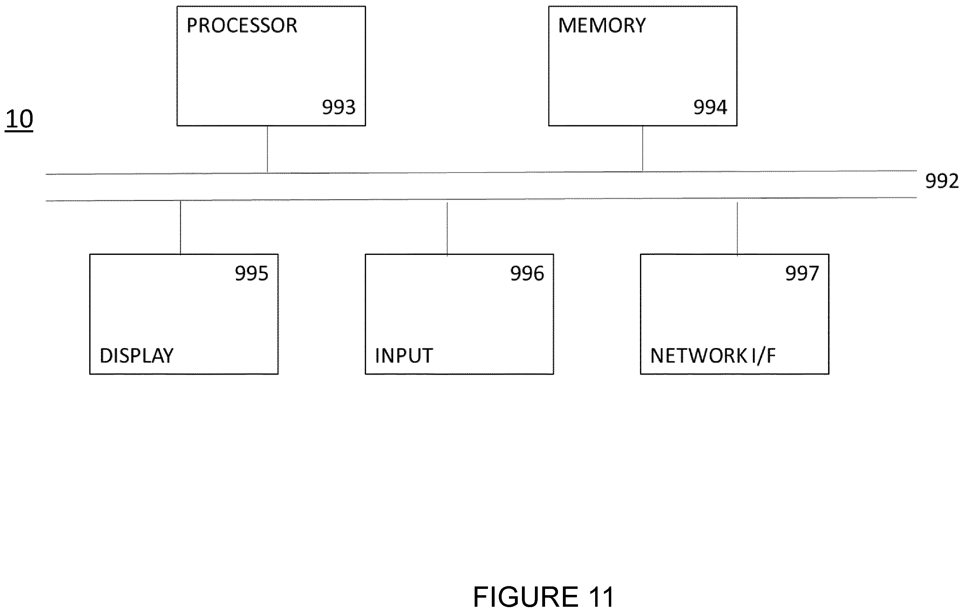

Figure 11 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S11-S14, S41-S49, S51-S57, and S61-64, and/or any processes described above.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S11-S14, S41-S49, S51-S57, and S61-64, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as images and/or difference amounts and/or graphs and/or detected obejcts and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 11. Such a computing device need not have every component illustrated in Figure 11, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising performing a training process, the training process comprising:
using first and second image encoder networks, generating first and second sets of embeddings based on a pair of first and second input images, respectively;
generating first and second nearest neighbor graphs, NNGs, based on the first and second sets of embeddings, respectively;
using at least one graph neural network, GNN, extracting first and second representations from the first and second NNGs, respectively; and
adjusting at least one network weight of the first image encoder network based on a difference between the first and second representations.

2. The computer-implemented method as claimed in claim 1, wherein:
generating the first set of embeddings comprises dividing the first input image into a plurality of first patch tokens and, using the first image encoder network, updating the first patch tokens by analyzing the other first patch tokens with an attention mechanism to generate the first set of embeddings comprising first updated patch tokens; and
generating the second set of embeddings comprises dividing the second input image into a plurality of second patch tokens and, using the second image encoder network, updating the second patch tokens by analyzing the other second patch tokens with an attention mechanism to generate the second set of embeddings comprising second updated patch tokens.

3. The computer-implemented method as claimed in claim 1 or claim 2, wherein the training process comprises computing the difference between the first and second representations.

4. The computer-implemented method as claimed in claim 3, wherein computing the difference between the first and second representations comprises:
performing a pooling operation on the first representation to generate first pooled features and performing a pooling operation on the second representation to generate second pooled features; and
computing a difference between the first and second pooled features.

5. The computer-implemented method as claimed in any of the preceding claims, wherein the first and second input images comprise first and second augmentations of a reference image or the reference image and an augmentation thereof, and wherein adjusting the at least one network weight of the first image encoder network comprises adjusting the at least one network weight of the first image encoder network to reduce or bring to or towards zero the difference between the first and second representations.

6. The computer-implemented method as claimed in any of the preceding claims, comprising performing the training process for a plurality of iterations with different pairs of input images for each iteration.

7. The computer-implemented method as claimed in claim 6, comprising distilling the updates to the first image encoder network after a number of iterations of the training process to the second image encoder network using a momentum encoder or using an exponential moving average-based update process.

8. The computer-implemented method as claimed in any of the preceding claims, further comprising using the first image encoder network in an image processing task after performing the training process.

9. The computer-implemented method as claimed in claim 8, wherein the image processing task comprises at least one of:
visual question answering, VQA;
object detection;
image classification;
image segmentation; and
image retrieval.

10. The computer-implemented method as claimed in any of the preceding claims, wherein the first and second image encoder networks each comprise a transformer-based architecture.

11. The computer-implemented method as claimed in any of the preceding claims, wherein the first and second image encoder networks each comprise a transformer network comprising a sequence of self-attention and feed-forward layers.

12. The computer-implemented method as claimed in any of the preceding claims, wherein generating each of the first and second NNGs comprises selecting k nearest neighbors for each said updated patch token and including nodes in the NNG corresponding to the said updated patch tokens, each connected to the nodes corresponding to its k nearest neighbors, wherein k is a positive integer.

13. The computer-implemented method as claimed in any of the preceding claims, wherein extracting the first and second representations comprises generating first and second graph embeddings of the of first and second NNGs, respectively.

14. A computer program which, when run on a computer, causes the computer to carry out a method comprising performing a training process, the training process comprising:
using first and second image encoder networks, generating first and second sets of embeddings based on a pair of first and second input images, respectively;
generating first and second nearest neighbor graphs, NNGs, based on the first and second sets of embeddings, respectively;
using at least one graph neural network, GNN, extracting first and second representations from the first and second NNGs, respectively; and
adjusting at least one network weight of the first image encoder network based on a difference between the first and second representations.

15. An information processing apparatus comprising a memory and a processor connected to the memory, wherein the processor is configured to perform a training process, the training process comprising:
using first and second image encoder networks, generating first and second sets of embeddings based on a pair of first and second input images, respectively;
generating first and second nearest neighbor graphs, NNGs, based on the first and second sets of embeddings, respectively;
using at least one graph neural network, GNN, extracting first and second representations from the first and second NNGs, respectively; and
adjusting at least one network weight of the first image encoder network based on a difference between the first and second representations.
